# EUROPÄISCHE PATENTSCHRIFT

(11) **EP 0 425 848 B1**
(45) Veröffentlichungstag und Bekanntmachung des Hinweises auf die Patenterteilung: **02.02.1994**
(21) Anmeldenummer: 90119312.8
(22) Anmeldetag: 09.10.1990
(51) Int. Cl.: B01J 20/32, B01D 15/08

(54) **Säulenpackungsmaterial für die Gelpermeationschromatographie, Verfahren zu dessen Herstellung sowie dessen Verwendung**
Column packing material for gel permeation chromatography, process of preparation and use thereof
Garnissage pour colonne de chromatographie de perméation sur gel, procédé pour sa préparation et son utilisation

(30) Priorität: 12.10.1989 DE 3934068
(43) Veröffentlichungstag der Anmeldung: 08.05.1991
(73) Patentinhaber: MACHEREY, NAGEL & CO., D-52355 Düren (DE)
(72) Erfinder: Wulff, Günter, Prof. Dr., W-4006 Erkrath (DE); Minarik, Milan, CS-15000 Prag 5 (CS); Oerschkes, Ralf Julius, W-4156 Willich 2 (DE)
(74) Vertreter: Paul, Dieter-Alfred, Dipl.-Ing.

(56) Entgegenhaltungen:
- EP-A- 0 143 423
- GB-A- 1 456 865
- GB-A- 2 075 362
- US-A- 4 242 227
- US-A- 4 560 704
- US-A- 4 699 717
- JOURNAL OF CHROMATOGRAPHIC SCIENCE, Band 19, 1981, Seiten 79-98; B. MONRABAL:"Polystyrene bonded silica as GPC packing: A variable pore diameter packingconcept in GPC"
- JOURNAL OF CHROMATOGRAPHY, Band 185, 1979, Seiten 305-319, Elsevier ScientificPublishing Co., Amsterdam, NL; H. ENGELHARDT et al.: "High-performanceexclusion chromatography of water soluble polymers with chemically bondedstationary phases"

## Beschreibung

Gegenstand der vorliegenden Erfindung sind poröse Partikel, die mit polymeren Gelen gefüllt sind, deren Herstellungsverfahren sowie ihre Verwendung als chromatographische Trägermaterialien. Durch die Einbringung des für chromatographische Zwecke sehr günstigen weichen Polymergels in eine harte, poröse Matrix sind derartige Materialien bei sehr guter chromatographischer Effizienz extrem druckstabil, nicht quellbar und auch trocken sehr gut lagerfähig.

In der Gelpermeationschromatographie (G.P.C.) benötigt man Säulenpackungen von Materialien, die eine hohe Zahl von Poren aufweisen, deren Durchmesser definiert und genau kontrollierbar ist. Diese Voraussetzungen werden durch anorganische, poröse Trägermaterialien, wie z.B. makroporöse Kieselgele, poröse Gläser, oder durch makroporöse Polymere, wie z.B. Stryrol/Divinylbenzol-Copolymere, erfüllt. Beide erwähnten Typen haben große Poren (60-3000Å Durchmesser) und ermöglichen somit die Trennung von Substanzen mit höheren Molgewichten. Zur Trennung von Substanzen mit niedrigem Molekulargewicht braucht man ein Trägermaterial mit kleineren Poren. Diese sind mit den vorgenannten Trägermaterialien nicht erreichbar. Hierfür können homogen vernetzte Polymergele als Trägermaterialien verwendet werden. Die Trennung der Substanzen erfolgt hier durch unterschiedliche Diffusion im Korn, in dem die Polymerketten eine Maschennetzstruktur aufbauen und größere Substanzen in ihrer Diffusion behindern. Der prinzipielle Nachteil dieser Materialien ist ihre geringe mechanische Stabilität. Die Partikel sind recht weich und bei höheren Drucken deformierbar, wodurch eine Chromatographiesäule bei höheren Drucken verstopft. Aufgrund dieser Nachteile sind die an sich sehr selektiven homogenvernetzten, weicheren Gele kaum noch auf dem Markt.

Heutzutage finden spezielle Trägermaterialien in diesem Molekulargewichtsbereich ihre Anwendung, deren genaue Herstellungsmethode aus der Literatur nicht ersichtlich ist. Diese Trägermaterialien enthalten aber keine anorganischen Bestandteile. Sie sind bezüglich ihrer Trennleistung sehr gut ihre Druckstabilität ist durchschnittlich, ihre Handhabung und Lagerfähigkeit ist mangelhaft, und im Preis gehören sie zu den teuersten Materialien auf dem Gebiet der HPLC und G.P.C.. Sie sind käuflich unter den Bezeichnungen PL-Gel, Styragel, TSK-Gel und Shodex-GPC-Säulen.
Allgemein bekannt sind Versuche, harte Partikel mit kleinen Poren darzustellen, die aber nicht zu Handelsprodukten geführt haben. Dabei wurden die Poren von Kieselgel mit Polymerschichten ausgekleidet, um die Poren zu verkleinern (B. Monrabal, Chromatogr. Sci. 19, 79 (1981)). Eine Diffusion innerhalb dieser Schichten war hierfür nicht erforderlich oder beabsichtigt, es wurden daher meist hoch vernetzte, nicht poröse Polymerschichten verwendet.
Ebenfalls aus der Literatur bekannt sind Versuche, die Oberflächen von Poren von porösen Festkörpern für den Gebrauch in der GPC durch Polymerbelegung zu desaktivieren (z.B. B. Sebille, J. Piquion, B. Boussonira, Eur. Pat. Appl. EP 225829 A2, 16. Jun. 1987; A. Ivanov et al., Mol. Genet. Mikrobiol. Virusol (11) 39 (1987), C.A. 108, 34286 198; Y. Komiya, H. Sasaki, K. Fukano, Kokai Tokkyo Koho JP 55/5941, 17. Jan. 1980). Weitere zahlreiche Arbeiten sind bekannt, in denen Säulenmaterialien hergestellt wurden, welche an der Oberfläche des Kieselgels chemisch gebundene Polymerschichten aufweisen, die zum Ionenaustausch, zur Reversed-Phase Chromatographie, zur Racemattrennung, u.ä. verwendet werden sollen (z.B. H. Okamura, I. Kato, M. Hiraoka, K. Toriumi; Ger. Offen. DE 2730771, 12. Jan. 1978; I. Shinichi, F. Kazuyuki, U.S. 4140653, 20. Feb. 1979; H. Figge, A. Deege, J. Koehler, G. Schomburg; J. Chromatogr. 351. 393 (1986); G. Wulff, D. Oberkobusch, M. Minárik, Reactive Polymers 3, 261 (1985); Daicel Chemical Industries Ltd., Kogai Tokkyo Koho JP 57/147434, 11. Sep. 1982; Y. Kosaka et al., Japan. Kokai JP 51/74694, 28. Jun. 1976; A.V. Il'ina et al., SU 687081, 25. Sep. 1979).
In allen diesen Arbeiten erfolgt die Trennung in der Chromatographiesäule durch andere Prinzipien als die der GPC. Weiterhin werden in allen Fällen mehr oder weniger dünne Schichten von Polymer auf der Porenoberfläche verwendet, um wie ausdrücklich erklärt wird, die Diffusion in den frei bleibenden Räumen des Korns gut möglich zu machen.

Aufgabe der vorliegenden Erfindung ist es, Säulenpackungsmaterialien für die Gelpermeationschromatographie zu schaffen, die die oben erwähnten Nachteile nicht aufweisen, d.h. die auch bei höheren Drücken nicht deformierbar sind und bei guter Druckstabilität eine gute Trennleistung aufweisen.

Gelöst wird diese Aufgabe erfindungsgemäß durch ein Säulenpackungsmaterial gemäß dem Oberbegriff des Hauptanspruchs mit den Merkmalen des Kennzeichens des Hauptanspruchs.

Wir haben nun überraschend gefunden, daß mit homogenen Polymergelen vollständig gefüllte poröse Materialien ausgezeichnete chromatographische Trägermaterialien darstellen. Dabei läßt sich die Polymernetzwerkstruktur im Polymergel der Poren durch die Anzahl von Vinylgruppen- haltigen, kovalent gebundenen Haftgruppen an der Oberfläche der Poren des Festkörpers sowie durch die Anzahl und Länge der Polymerketten bestimmen. Die Herstellungsverfahren dieser Partikel sind ebenfalls Gegenstand dieser Erfindung.

Beim erfindungsgemäßen Herstellungsverfahren werden Moleküle mit polymerisierbaren Doppelbindungen oder auch Moleküle mit anderen reaktiven zur Polymerisation, Polykondensation oder Polyaddition geeigneten funktionellen Gruppen auf der Oberfläche von porösen Festkörpern in Konzentrationen zwischen 0,01 und 6 µmol/m² chemisch gebunden.

Als poröse Festkörper sind Materialien mit einem inneren Volumen von 0,1-3 ml/g (vorzugsweise zwischen 0,6-1,2 ml/g) und einem mittleren Porenduchmesser von 6-500 nm (vorzugsweise zwischen 10-50 nm) geeignet. Die mittlere Partikelgröße sollte zwischen 1 und 50 µm (vorzugsweise zwischen 3-10 µm) liegen und vorzugsweise eine kleinere Standardabweichung als 50% besitzen.
Als poröse Materialien kommen z.B. Kieselgel, Aluminiumoxid, Celite, Zeolithe, poröses Glas aber auch makroporöse Polymere auf der Basis von Vinyl-, Vinyliden, Methacrylat, Acrylat, o.ä. Monomeren mit geeigneten Vernetzern wie Divinylbenzol, Glykoldimethacrylat, Methylenbisacrylamid o.ä. in Frage. Grundsätzlich können jedoch alle porösen Materialien mit einer ausreichenden Inertheit und mechanischen Stabilität benutzt werden.

Die Bindung der polymerisierbaren Gruppierung kann nach literaturbekannten Verfahren erfolgen. Günstig ist u.a. die Bindung von Halogen-n oder Alkoxy-silanen auf Kieselgel z.B. mit 3-(Trimethoxysilyl)propylmethacrylat oder 4-(Dimethylchlorsilyl)-styrol oder von Methacrylanhydrid auf Poly-hydroxy-ethylenmethacrylat.
Für den erfindungsgemäßen Anwendungszweck entscheidend ist die Einstellung der geeigneten Konzentration der polymerisierbaren Gruppen auf der Oberfläche der Poren, wie später näher ausgeführt wird. Zur Regulierung dieser Konzentration wird entweder eine mehr oder weniger große Menge bei der Reaktion eingesetzt oder es wird das Reagenz mit einem ähnlich gebauten Reagenz jedoch ohne polymerisierbare Gruppe verdünnt. In jedem Fall müssen beim Kieselgel, Glas, Zeolithe oder Celite nicht umgesetzte Silanolgruppen anschließend nach an sich bekannten Verfahren verkappt werden, was z.B. mit Hexamethyldisilazan oder ähnlichen Reagentien erfolgen kann. Auch bei anderen Festkörpern müssen den späteren Anwendungszweck störende Gruppierungen an der Oberfläche desaktiviert werden.

Zum derartig modifizierten porösen Festkörper wird das zu polymerisierende Monomer oder Monomergemisch in einem leichtflüchtigen Lösungsmittel in einer Menge von 0,1-10 g pro g Festkörper hinzugegeben. Vorzugsweise wird ein um 5-100% größeres Volumen an Monomer als das innere Volumen des Festkörpers benutzt. Anschließend wird das leichtflüchtige Lösungsmittel im Vakuum von 0,1-300 mbar und bei einer Temperatur von 0-100°C entfernt. Zum Aufbringen geringerer Monomermengen wird das Monomer zusätzlich mit einem schwerer flüchtigen Inertlösungsmittel wie Toluol, Xylol verdünnt. Als Monomere kommen alle für die radikalische Polymerisation geeigneten Monomere (Olefine, Styrolderivate, Acrylderivate, Methacrylatderivate etc.) in Frage. In diesem Falle wird der Monomermischung ein geeigneter Initiator (literaturbekannte Peroxide oder Azoverbindungen) zugesetzt. Anschließend wird für 1-100 Stdn. auf 30-120°C erhitzt. Zur Polymerisationsauslösung können auch andere literaturbekannte Verfahren benutzt werden (anionische, kationische, koordinative Polymerisation). Die Monomeren können aber auch so geartet sein, daß eine Polykondensation oder Polyaddition zum Aufbau des Polymers möglich ist.

Nach der Polymerisation wird das nicht chemisch gebundene Polymer mit Hilfe eines geeigneten Lösungsmittels (d.h. mit einem Lösungsmittel, das dieses Polymer gut löst) erschöpfend ausgewaschen und anschließend das mit dem Polymer gefüllte poröse Material getrocknet.

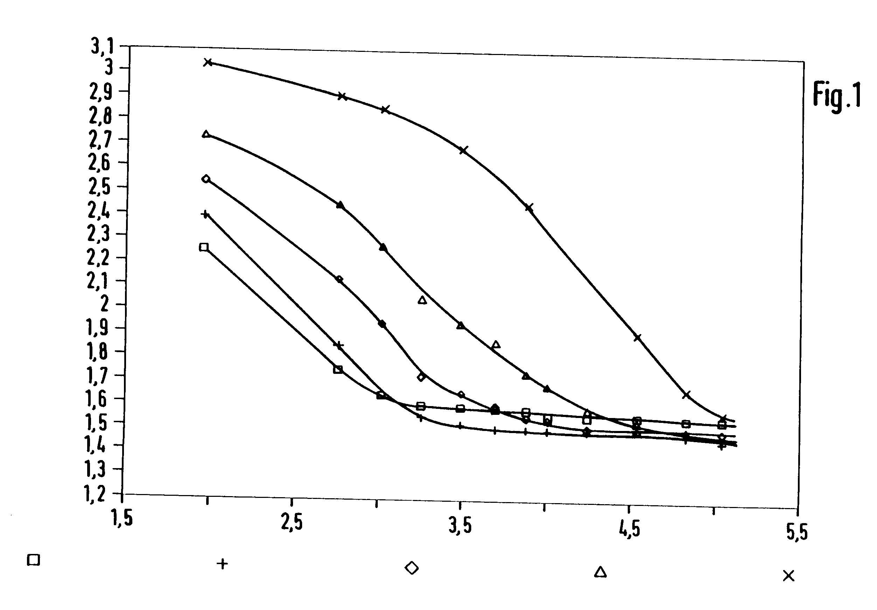

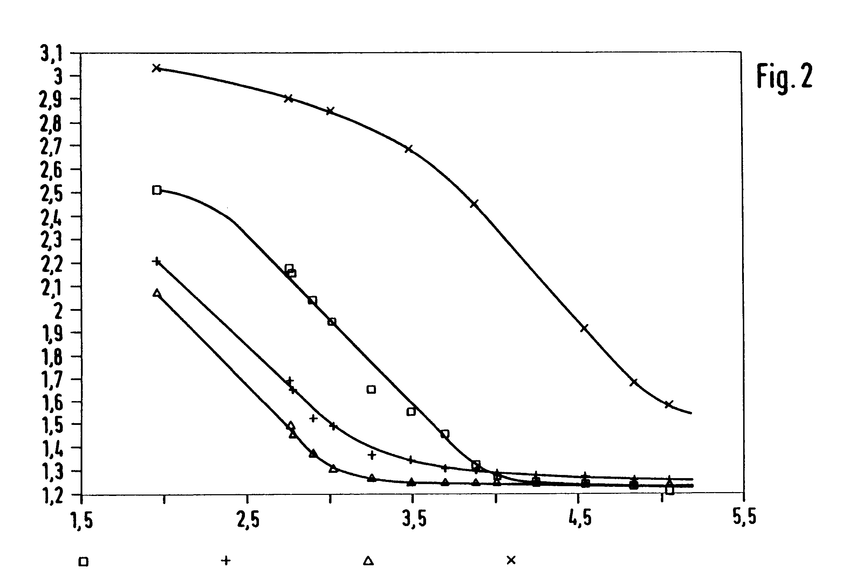

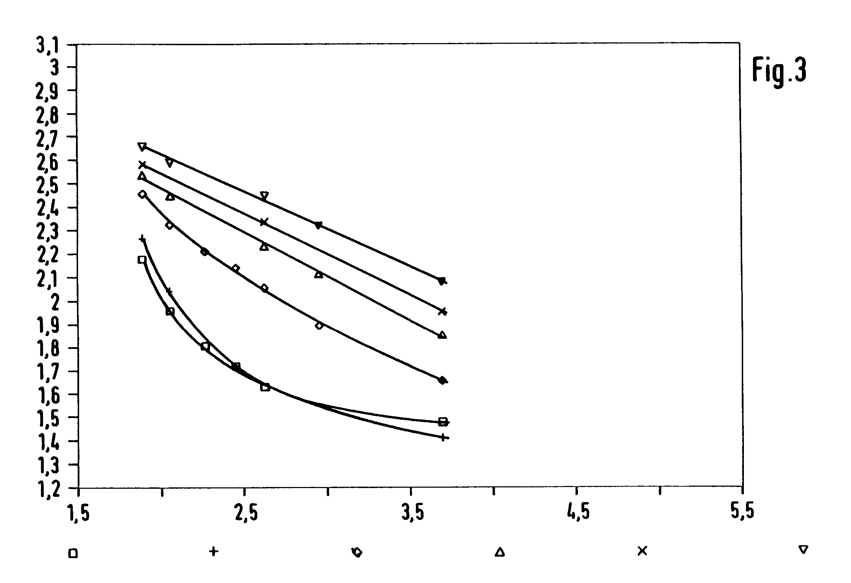

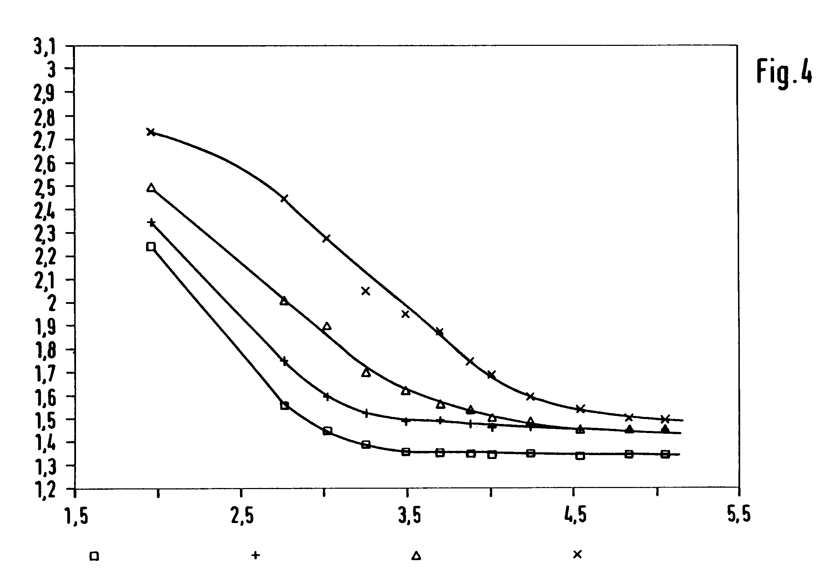

Derartig hergestellte Materialien stellen ausgezeichnete Packungsmaterialien für chromatographische Säulen speziell für die Gelpermeationschromatographie dar. Eine der erfindungsgemäßen Besonderheiten dieser GPC-Materialien besteht darin, daß die Netzwerkmaschenstruktur des Polymers, daß die Ausschlußgrenzen für die zu trennenden Substanzen festlegt, nicht durch den Zusatz von üblichen bifunktionellen Vernetzern kontrolliert wird. Es handelt sich hier um die neuartige Art der Vernetzung über die Haftgruppen an der Oberfläche. Wie Abb. 1 zeigt können durch die Zahl der Haftgruppen auf der Oberfläche der Poren bei der Herstellung die Ausschlußgrenzen für die GPC gesteuert werden. Sie können auch in der üblichen Weise durch Zusatz von Vernetzern gesteuert werden, doch ist dann der Massentransfer in der Chromatographie wesentlich ungünstiger. Die Ausschlußgrenzen können weiterhin in einem gewissen Ausmaß durch die Anzahl von Polymerketten pro Hohlraum bzw. deren Polymerisationsgrad gesteuert werden. Eine geringere Anzahl von Polymerketten erhält man durch Verkürzung der Polymerisationszeit (Abb. 2) oder durch Verdünnen der Monomermischung mit einem schwerer flüchtigen Inertlösungsmittel bei der Auftragung auf das poröse Material und bei der anschließenden Polymerisation (Abb. 3). Der Polymerisationsgrad der Ketten kann durch den Anteil an Initiator, durch Zusatz von Überträgern bei der Polymerisation oder durch die Polymerisationstemperatur gesteuert werden. Auch hierdurch werden die Ausschlußgrenzen beeinflußt (Abb. 4). Bei kleinerem Polymerisationsgrad der Ketten ist der Massentransfer günstiger und das Material läßt sich besser in die Säule packen.

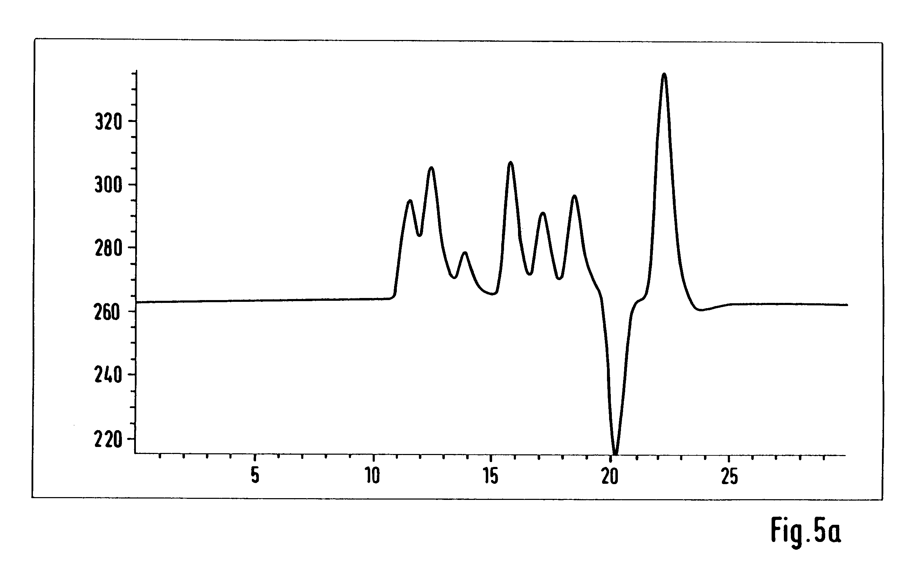

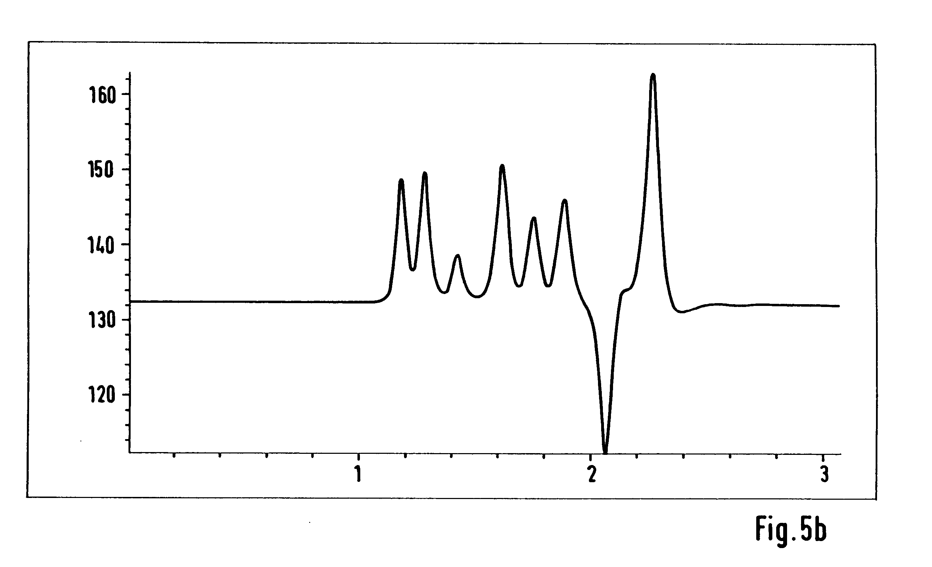

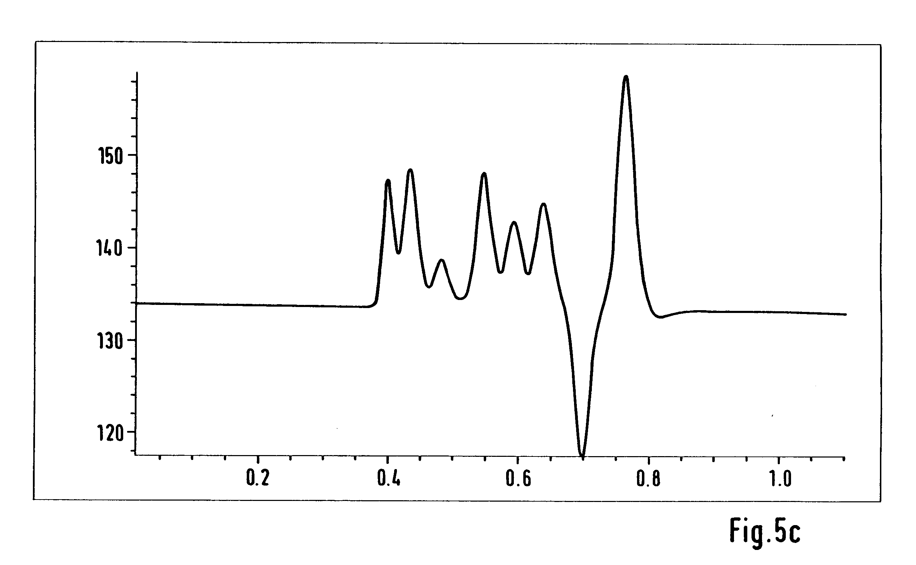

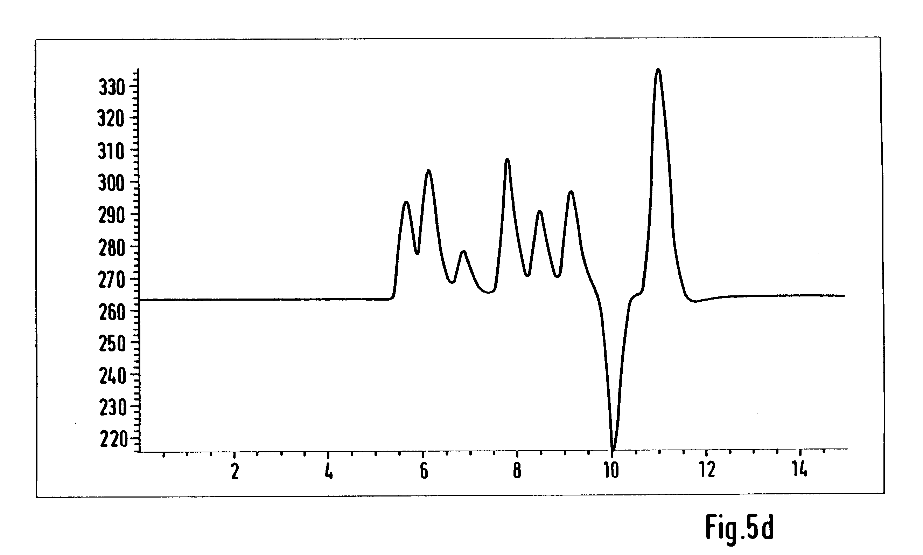

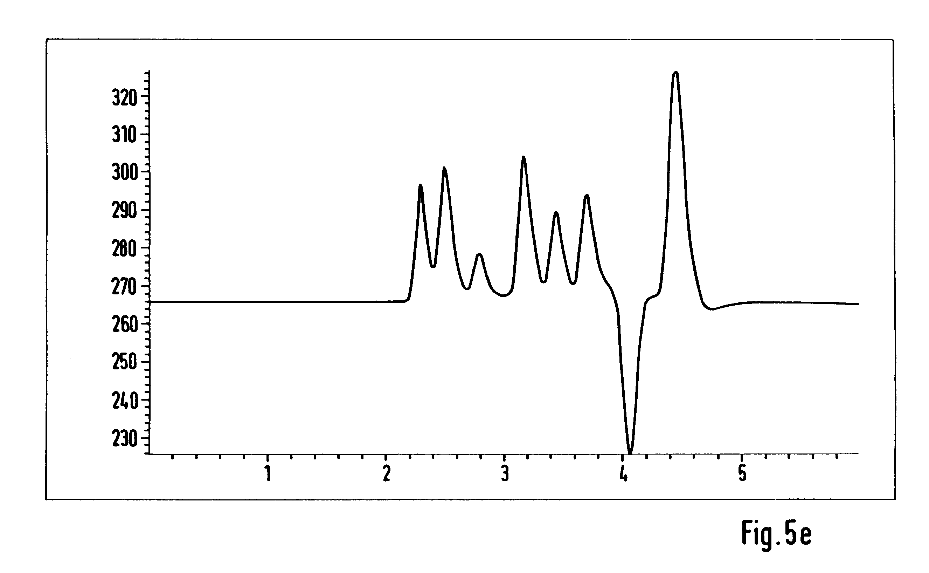

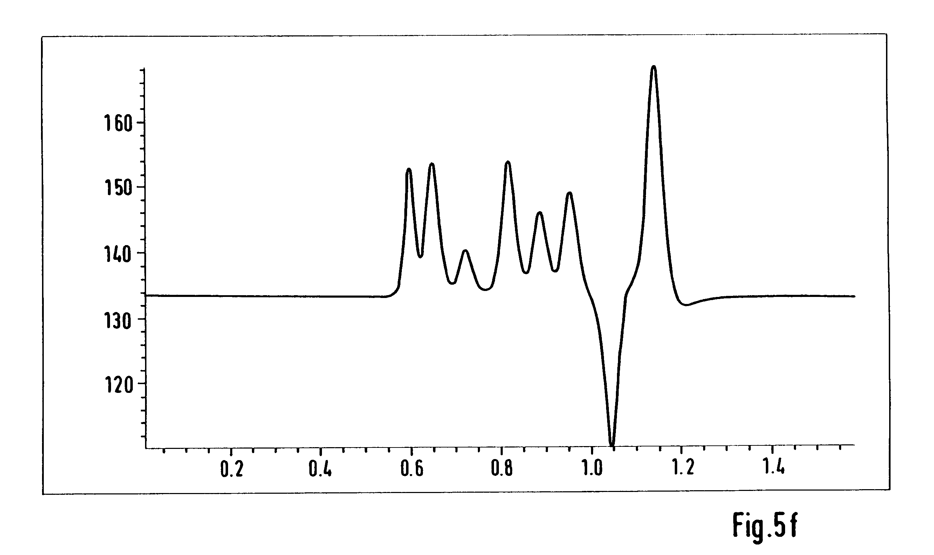

Weitere erfindungsgemäße Vorteile der so hergestellten Materialien sind die mechanische Widerstandsfähigkeit, da die an sich weichen polymeren Gelphasen durch die harte poröse Struktur der Festkörper geschützt sind. Sie können daher bei allen in der HPLC üblichen Drucken benutzt werden. Wie die Abb. 5a-c zeigen, ist die Trennleistung bei hohen Flußraten und hohen Drucken sehr gut, sie zeigt ein Maximum bei 1 ml/Min, wodurch Trennungen in 2,4 Min beendet sind. Aber auch bei 3 ml/Min und 388 bar ist die Trennung noch gut und nach 0,8 Min beendet. Die Partikel lassen sich einfach und mit guter Qualität in Säulen füllen und der Säuleninhalt ist praktisch nicht quellbar. Lösungsmittel können während der Chromatographie direkt gewechselt werden und die Säulen können auch trocken aufbewahrt werden, ohne daß Qualitätseinbußen eintreten. Die Säule mit Füllung kann sogar längere Zeit offen auf 80°C erhitzt werden und anschließend wieder benutzt werden. Die Trennleistung verändert sich nicht. Auch plötzliche Druckerhöhungen verursachen keine Verschlechterung der Säulenfüllung.

Besonders günstig als poröses Material ist makroporöses Kieselgel, das in Bezug auf inneres Volumen, Porenverteilung, Partikelform und Partikelgrößenverteilung gut kontrolliert kommerziell hergestellt wird.

Die Herstellung der durch Kieselgel verstärkten polymeren Gelpackungen erfolgt nach dem erfindungsgemäßen Verfahren in zwei Schritten.
Der erste Schritt erfolgt auf heutigem technischen Niveau in Übereinstimmung mit bekannten Methoden, jedoch unter neuen experimentellen Bedingungen. In diesem Schritt soll eine gewünschte Konzentration an polymerisierbaren Gruppen auf der Oberfläche des Kieselgels gebunden werden. Zu diesem Zweck wird trockenes Kieselgel mit einer Verbindung, die polymerisierbare Gruppen besitzt, direkt oder in einem Lösungsmittel gelöst, in Kontakt gebracht und durch chemische Reaktion an die Oberfläche des Kieselgels gebunden. Als geeignete Reagentien zur Modifizierung kann man z.B. 3-(Trimethoxysilyl)-propylmethacrylat, 4-(Dimethylchlorsilyl)-styrol oder 4-(Trichlorsilyl)-styrol verwenden. Besonders geeignet ist 4-(Dimethylchlorsilyl)-styrol. Die Konzentration dieser Gruppen kann auch durch Zusatz von unterschiedlichen Mengen an Trimethylchlorsilan variiert werden. Nach gründlichem Waschen des modifizierten Kieselgels werden die restlichen, noch zugänglichen Silanolgruppen auf der Kieselgeloberfläche in an sich bekannter Weise mit einem geeigneten Reagenz verkappt. Als Reagentien zum Verkappen der Silanolgruppen eignen sich z.B. Trimethylchlorsilan, 1,1,1,3,3,3-Hexamethylendisilazan (HMDS) oder Ethoxytrimethylsilan. Besonders schonend wirkt HMDS.

Im zweiten Schritt des erfindungsgemäßen Verfahrens werden zum erfindungsgemäß modifizierten Kieselgel zur Polymerisation geeignete Monomere in Konzentrationen von 0,1 bis 1000 Gew.%, bezogen auf das ursprünglich eingesetzte Kieselgel zugegeben. Das Monomer enthält bereits einen geeigneten Initiator, in einer Konzentration von 0,01 bis 10 Gew.%, bezogen auf das Monomer. Nach gleichmäßiger Verteilung der Monomere auf der Kieselgeloberfläche erfolgt die Polymerisation. Praktischerweise erfolgt die Polymerisation bei Verwendung von AIBN als Initiator bei Temperaturen zwischen 55 und 70°C. Im Anschluß an die Polymerisation wird chemisch nicht gebundenes, eluierbares Polymer mit einem geeigneten Lösungsmittel ausgewaschen. Besonders geeignet hierfür sind Methylenchlorid, Toluol oder Tetrahydrofuran.

Die folgenden Beispiele zur praktischen Anwendung verdeutlichen das erfindungsgemäße Verfahren, beschränken dieses jedoch nicht.

### Beispiel 1:

Die Aktivierung des verwendeten Kieselgels, Matrex Silica Si (mittlerer Porendurchmesser 25 nm, Partikelgröße 0,01 mm), der Firma Amicon (Witten, BRD) erfolgte durch zweistündiges Kochen in 5% Salpetersäure, neutral Waschen mit destilliertem Wasser und Trocknen im Vakuumtrockenschrank bei 120°C.
2,5 g des so vorbehandelten Kieselgels wurden in 25 ml trockenem Tetrachlorkohlenstoff suspendiert, nach der Zugabe von 0,021 ml trockenem Pyridin und 0,023 ml 4-(Dimethylchlorsilyl)-styrol wurde zwei Stunden lang bei Raumtemperatur geschüttelt. Nach dem Abfiltrieren und Waschen mit trockenem Methylenchlorid erfolgte die Trocknung des modifizierten Kieselgels bei 40°C im Vakuumtrockenschrank. Der Kohlenstoffgehalt des so modifizierten Kieselgels betrug 0,9%, d.h. die Konzentration der Ankergruppe betrug etwa 9%, bezogen auf die maximal mögliche Belegung der Oberfläche mit Ankergruppe.
Zu einer Suspension des modifizierten Kieselgels in 25 ml trockenem Tetrachlorkohlenstoff wurden 2.5 ml 1,1,1,3,3,3-Hexamethylendisilazan (HMDS) gegeben und bei Raumtemperatur zwei Stunden lang geschüttelt. Nach Abfiltrieren und Waschen mit Methylenchlorid erfolgte die Trocknung bei 40°C im Vakuumtrockenschrank. Der Kohlenstoffgehalt des so modifizierten und verkappten Kieselgels betrug 4,08%.
Zu einer Suspension, bestehend aus 2,2 g des modifizierten und verkappten Kieselgels in 25 ml trockenem Methylenchlorid wurden 3,977 g Styrol und 0,209 g Azo-bis-isobutyronitril (AIBN) gegeben. Nach Schütteln der Suspension und Entfernung des Methylenchlorids am Rotationsverdampfer unter Wasserstrahlvakuum, sowie mehrmaligem Sekurieren des Reaktionskolbens and anschließendem Anlegen eines Vakuums von etwa 120 mbar erfolgte die Polymerisation bei 70°C drei Tage lang.
Im Anschluß an die Polymerisation wurde das Kieselgelpolymer in 50 ml Methylenchlorid suspendiert und sechs Stunden lang geschüttelt. Nach Abfiltrieren und gründlichem Waschen erfolgte die Trocknung bei 40°C im Vakuumtrockenschrank. Der Kohlenstoffgehalt des Kieselgelpolymers betrug 24,5%, d.h. auf das ursprüngliche Kieselgel berechnet waren insgesamt 37,8% organische Verbindungen und Polymer hinzugefügt worden.

### Beispiel 2:

Die Aktivierung des verwendeten Kieselgels, Matrex Silica Si (mittlerer Porendurchmesser 25 nm, Partikelgröße 0,01 mm), der Firma Amicon (Witten, BRD) erfolgte durch zweistündiges Kochen in 5% Salpetersäure, neutral Waschen mit destilliertem Wasser und Trocknen im Vakuumtrockenschrank bei 120°C.
7,5 g des so vorbehandelten Kieselgels wurden in 75 ml trockenem Tetrachlorkohlenstoff suspendiert, nach der Zugabe von 1,95 ml trockenem Pyridin und einem Gemisch, bestehend aus 0,261 ml 4-(Dimethylsilyl)-styrol und 1,910 ml Chlortrimethylsilan zugegeben und 20 Stunden lang bei Raumtemperatur, bei gelegentlichen Schütteln stehengelassen. Nach dem Abfiltrieren und Waschen mit trockenem Methylenchlorid erfolgte die Trocknung des modifizierten Kieselgels bei 40°C im Vakuumtrockenschrank. Der Kohlenstoffgehalt des so modifizierten Kieselgels betrug 4,77%. Zu einer Suspension, bestehend aus 7,0 g des modifizierten Kieselgels in 70 ml trockenem Methylenchlorid wurden 16,703 g Styrol und 0,879 g Azo-bis-isobutyronitril (AIBN) gegeben. Nach Schütteln der Suspension und Entfernung des Methylenchlorids am Rotationsverdampfer unter Wasserstrahlvakuum, sowie mehrmaligem Sekurieren des Reaktionskolbens und anschließendem Anlegen eines Vakuums von etwa 120 mbar erfolgte die Polymerisation bei 70°C drei Tage lang.
Im Anschluß an die Polymerisation wurde das Kieselgelpolymer zweimal in 100 ml Methylenchlorid suspendiert und sechs Stunden lang geschüttelt. Nach Abfiltrieren und gründlichem Waschen erfolgte die Trocknung bei 40°C im Vakuumtrockenschrank.
Der Kohlenstoffgehalt des Kieselgelpolymers betrug 31,9%. Auf das ursprüngliche Kieselgel berechnet waren insgesamt 55,6% organische Verbindungen und Polymer hinzugefügt worden.

### Beispiel 3:

Die Aktivierung des verwendeten Kieselgels, Matrex Silica Si (mittlerer Porendurchmesser 25 nm, mittlere Partikelgröße 0,01 mm), der Firma Amicon (Witten, BRD) erfolgte durch zweistündiges Kochen in 5% Salpertersäure, neutral Waschen mit destilliertem Wasser und Trocknen im Vakuumtrockenschrank bei 120°C.
5 g des so vorbehandelten Kieselgels wurden in 50 ml trockenem Tetrachlorkohlenstoff suspendiert und nach Zugabe von 0,273 ml 3-(Trimethoxysilyl)-propylmethacrylat wurde 8 Stunden unter Rückfluß zum Sieden erhitzt. Nach dem Abfiltrieren und Waschen mit trockenem Methylenchlorid erfolgte die Trocknung des modifizierten Kieselgels bei 40°C im Vakuumtrockenschrank. Der Kohlenstoffgehalt des so modifizierten Kieselgels betrug 5,31%.
Zu einer Suspension des modifizierten Kieselgels in 50 ml trockenem Tetrachlorkohlenstoff wurden 5 ml 1,1,1,3,3,3-Hexamethylendisilazan (HMDS) gegeben und bei Raumtemperatur zwei Stunden lang geschüttelt. Nach Abfiltrieren und Waschen mit Methylenchlorid erfolgte die Trocknung bei 40°C im Vakuumtrockenschrank. Der Kohlenstoffgehalt des so modifizierten und verkappten Kieselgels betrug 5,64%.
Zu einer Suspension bestehend aus 4 g des modifizierten und verkappten Kieselgels in 50 ml trockenem. Methylenchlorid wurden 3,268 g 2-Hydroxyethylmethacrylat und 0,084 g Azo-bis-isobutyronitril (AIBN) gegeben. Nach Schütteln der Suspension und Entfernung des Methylenchlorids am Rotationsverdampfer unter Wasserstrahlvakuum, sowie mehrmaligem Sekurieren des Reaktionskolbens und anschließendem Anlegen eines Vakuums von etwa 120 mbar erfolgte die Polymerisation bei 70°C drei Tage lang. Im Anschluß an die Polymerisation wurde das Kieselgelpolymer in 100 ml Methanol suspendiert und sechs Stunden lang geschüttelt. Nach Abfiltrieren und gründlichem Waschen des Materials erfolgte die Trocknung bei 40°C im Vakuumtrockenschrank. Der Kohlenstoffgehalt des Keiselgelpolymers betrug 27,67%. Auf das ursprüngliche Kieselgel berechnet waren insgesamt 99,2% organische Verbindungen und Polymer hinzugefügt worden.

### Beispiel 4:

Die Aktivierung des verwendeten Kieselgels, Nucleosil 300-5 (mittlerer Porendurchmesser 30 nm, Partikelgröße 0,005 mm), der Firma Macherey und Nagel (Düren, BRD) erfolgte durch zweistündiges Kochen in 5% Salpetersäure, neutral Waschen mit destilliertem Wasser und Trocknen im Vakuumtrockenschrank bei 120°C.
5,0 g des so vorbehandelten Kieselgels wurden in 50 ml trockenem Tetrachlorkohlenstoff suspendiert, nach der Zugabe von 0,7 ml trockenem Pyridin und einem Gemisch, bestehend aus 0,070 ml 4-(Dimethylsilyl)-styrol und 0,466 ml Chlortrimethylsilan zugegeben und 20 Stunden lang bei Raumtemperatur, bei gelegendlichem Schütteln stehen gelassen.Nach dem Abfiltrieren und Waschen mit trockenem Methylenchlorid erfolgt die Trocknung des modifizierten Kieselgels bei 40°C im Vakuumtrockenschrank.Der Kohlenstoffgehalt des so modifizierten Kieselgels betrug 1,59%. Zu einer Suspension, bestehend aus 5,0 g des modifizierten Kieselgels in 50 ml trockenem Methylenchlorid wurden 9,09 g Styrol und 0,478 g Azo-bis-isobutyronitril (AIBN) gegeben. Nach Schütteln der Suspension und Entfernung des Methylenchlorids am Rotationsverdampfer unter Wasserstrahlvakuum, sowie mehrmaligem Sekurieren des Reaktionskolbens und anschließendem Anlegen eines Vakuums von etwa 120 mbar erfolgte die Polymerisation bei 70°C drei Tage lang.
Im Anschluß an die Polymerisation wurde das Kieselgelpolymer zweimal in 100 ml Methylenchlorid suspendiert und sechs Stunden lang geschüttelt. Nach Abfiltrieren und gründlichem Waschen erfolgte die Trocknung bei 40°C im Vakuumtrockenschrank.
Der Kohlenstoffgehalt des Kieselgelpoymers betrug 16,81%. Auf das ursprüngliche Kieselgel berechnet waren insgesamt 22,3% organische Verbindungen und Polymer hinzugefügt worden.

### Beispiel 5:

Die Aktivierung des verwendeten Kieselgels, Matrex Silica Si (mittlerer Porendurchmesser 25 nm, Partikelgröße 0,01 mm), der Firma Amicon (Witten, BRD) erfolgte durch zweistündiges Kochen in 5% Salpetersäure, neutral Waschen mit destilliertem Wasser und Trocknen im Vakuumtrockenschrank bei 120°C.
5 g des so vorbehandelten Kieselgels wurden in 50 ml trockenem Tetrachlorkohlenstoff suspendiert, nach der Zugabe von 1,95 ml trockenem Pyridin und 2,13 ml 4-(Dimethylchlorsilyl)-styrol wurde zwei Stunden lang bei Raumtemperatur geschüttelt. Nach dem Abfiltrieren und Waschen mit trockenem Methylenchlorid erfolgte die Trocknung des modifizierten Kieselgels bei 40°C im Vakuumtrockenschrank.Der Kohlenstoffgehalt des so modifizierten Kieselgel betrug 9,79 %.
Zu einer Suspension des modifizierten Kieselgels in 50 ml trockenem Tetrachlorkohlenstoff wurden 5,0 ml 1,1,1,3,3,3 Hexamethylendisilazan (HMDS) gegeben und bei Raumtemperatur zwei Stunden lang geschüttelt. Nach Abfiltrieren und Waschen mit Methlenchlorid erfolgte die Trocknung bei 40°C im Vakuumtrockenschrank. Der Kohlenstoffgehalt des so modifizierten und verkappten Kieselgels betrug 10,0%. Zu einer Suspension, bestehend aus 5 g des modifizierten und verkappten Kieselgels in 50 ml trockenem Methylenchlorid wurden 5,966 g Styrol und 0,314 g Azo-bis-isobutyronitril (AIBN) gegeben. Nach Schütteln der Suspension und Entfernung des Methylenchlorids am Rotationsverdampfer unter Wasserstrahlvakuum, sowie mehrmaligem Sekurieren des Reaktionskolbens und anschließendem Anlegen eines Vakuums von etwa 120 mbar erfolgte die Polymerisation bei 70°C drei Tage Lang.
Im Anschluß an die Polymerisation wurde das Kieselgelpolymer in 75 ml Methylenchlorid suspendiert und sechs Stunden lang geschüttelt. Nach Abfiltrieren und gründlichem Waschen des erfolgte die Trocknung bei 40°C im Vakuumtrockenschrank. Der Kohlenstoffgehalt des Kieselgelpoymers betrug 46,71%, d.h. auf das ursprüngliche Kieselgel berechnet waren insgesamt 102,6% organische Verbindungen und Polymer hinzugefügt worden.

### Beispiel 6:

Die Aktivierung des verwendeten Kieselgel, LiChrosorb Si 100 (mittlerer Porendurchmesser 10 nm, Partikelgröße 0,01 mm), der Firma Merck (Darmstadt, BRD) erfolgte durch zweistündiges Kochen in 5% Salpetersäure, neutral Waschen mit destilliertem Wasser und Trocknen im Vakuumtrockenschrank bei 120°C.
5,0 g des so vorbehandelten Kieselgels wurden in 50 ml trockenem Tetrachlorkohlenstoff suspendiert, nach der Zugabe von 1,94 ml trockenem Pyridin und 2,279 ml 4-(Dimethylchlorsilyl)-styrol wurde zwei Stunden lang bei Raumtemperatur geschüttelt.Nach dem Abfiltrieren und Waschen mit trockenem Methylenchlorid erfolgte die Trocknung des modifizierten Kieselgels bei 40°C im Vakuumtrockenschrank. Der Kohlenstoffgehalt des so modifizierten Kieselgel betrug 9,47%.
Zu einer Suspension des modifizierten Kieselgels in 50 ml trockenem Tetrachlorkohlenstoff wurden 5,0 ml 1,1,1,3,3,3 Hexamethylendisilazan (HMDS) gegeben und bei Raumtemperatur zwei Stunden lang geschüttelt. Nach Abfiltrieren und Waschen mit Methlenchlorid erfolgte die Trocknung bei 40°C im Vakuumtrockenschrank. Der Kohlenstoffgehalt des so modifizierten und verkappten Kieselgels betrug 9,85%. Zu einer Suspension, bestehend aus 5 g des modifizierten und verkappten Kieselgels in 50 ml trockenem Methylenchlorid wurden 11,931 g Styrol und 0,62 g Azo-bis-isobutyronitril (AIBN) gegeben. Nach Schütteln der Suspension und Entfernung des Methylenchlorids am Rotationsverdampfer unter Wasserstrahlvakuum, sowie mehrmaligem Sekurieren des Reaktionskolbens und anschließendem Anlegen eines Vakuums von etwa 120 mbar erfolgte die Polymerisation bei 70°C drei Tage lang.
Im Anschluß an die Polymerisation wurde das Kieselgelpolymer in 75 ml Methylenchlorid suspendiert und sechs Stunden lang geschüttelt. Nach Abfiltrieren und gründlichem Waschen des erfolgte die Trocknung bei 40°C im Vakuumtrockenschrank. Der Kohlenstoffgehalt des Kieselgelpolymers betrug 46,58%, d.h. auf das ursprüngliche Kieselgel berechnet waren insgesamt 102% organische Verbindungen und Polymer hinzugefügt worden.

### Beispiel 7:

Die Aktivierung des verwendeten Kieselgels, Matrex Silica Si (mittlerer Porendurchmesser 25 nm, Partikelgröße 0,01 mm), der Firma Amicon (Witten, BRD) erfolgte durch zweistündiges Kochen in 5% Salpetersäure, neutral Waschen mit destilliertem Wasser und Trocknen im Vakuumtrockenschrank bei 120°C.
5 g des so vorbehandelten Kieselgels wurden in 25 ml trockenem Tetrachlorkohlenstoff suspendiert, nach der Zugabe von 1,95 ml trockenem Pyridin und 2,164 ml 4-(Dimethylchlorsilyl)-styrol wurde zwei Stunden lang bei Raumtemperatur geschüttelt.Nach dem Abfiltrieren und Waschen mit trockenem Methylenchlorid erfolgte die Trocknung des modifizierten Kieselgels bei 40°C im Vakuumtrockenschrank. Der Kohlenstoffgehalt des so modifizierten Kieselgels betrug 9,79%.
Zu einer Suspension des modifizierten Kieselgels in 50 ml trockenem Tetrachlorkohlenstoff wurden 5 ml 1,1,1,3,3,3 Hexamethylendisilazan (HMDS) gegeben und bei Raumtemperatur zwei Stunden lang geschüttelt. Nach Abfiltrieren und Waschen mit Methlenchlorid erfolgte die Trocknung bei 40°C im Vakuumtrockenschrank. Der Kohlenstoffgehalt des so modifizierten und verkappten Kieselgels betrug 10,0%.
Zu einer Suspension, bestehend aus 4 g des modifizierten und verkappten Kieselgels in 40 ml trockenem Methylenchlorid wurden 3,18 g Styrol , 9,104 g Toluol und 0,167 g Azo-bis-isobutyronitril (AIBN) gegeben. Nach Schütteln der Suspension und Entfernung des Methylenchlorids am Rotationsverdampfer unter Wasserstrahlvakuum, sowie mehrmaligem Sekurieren des Reaktionskolbens mit N₂ und anschließendem Anlegen eines Vakuums von etwa 120 mbar erfolgte die Polymerisation bei 70°C drei Tage lang.
Im Anschluß an die Polymerisation wurde das Kieselgelpolymer in 50 ml Methylenchlorid suspendiert und sechs Stunden lang geschüttelt. Nach Abfiltrieren und gründlichem Waschen erfolgte die Trocknung bei 40°C im Vakuumtrockenschrank. Der Kohlenstoffgehalt des Kieselgelpolymers betrug 31,3%, d. h. auf das ursprüngliche Kieselgel berechnet waren insgesamt 51,5% organische Verbindung und Polymer hinzugefügt worden.

### Beispiel 8:

Die Trocknung des verwendeten HEMA 1000 (Hydroxyethylmethacrylats, mittlerer Porendurchmesser 100 nm) bezogen von der Firma Polymer Standards (Mainz, BRD) erfogte bei 40°C im Vakuumtrockenschrank.
5 g des getrockneten HEMA 1000 wurden in 100 ml trockenem Methylenchlorid suspendiert, nach der Zugabe von 0,1 ml tockenem Pyridin und 0,05 ml Methacrylsäurechlorid wurde bei Raumtemperatur zwei Stunden lang geschüttelt. Nach Abfiltrieren und Waschen mit Methylenchlorid erfolgte die Trocknung bei 40°C im Vakuumtrockenschrank.
Zu einer Suspension bestehend aus 50 ml trockenem Methylenchlorid und 5 g des modifizierten HEMA wurden 5,0 g 2-Hydroxyethylmethacrylat und 0,263 g AIBN gegeben. Nach Schütteln der Suspension und Entfernung des Methylenchlorids am Rotationsverdampfer unter Wasserstrahlvakuum, sowie mehrmaligem Sekurieren mit N₂ des Reaktionskolbens und anschließendem Anlegen eines Vakuums von etwa 120 mbar erfolgte die Polymerisation bei 70°C drei Tage lang.
Im Anschluß an die Polymerisation wurde das modifizierte HEMA in 100 ml Methanol suspendiert und sechs Stunden lang geschüttelt. Nach Abfiltrieren und gründlichem Waschen erfolgte die Trocknung bei 40°C im Vakuumtrockenschrank.

### Beispiel 9:

Die Aktivierung, Modifizierung und die Polymerisation des Kieselgels, Matrex Silica Si (mittlerer Porendurchmesser 25 nm, Partikelgröße 0,005 mm) der Firma Amicon (Witten, BRD) erfolgte analog dem Beispiel 2.
3,5 g des gemäß Beispiel 2 polymer modifizierten Kieselgels wurden in 125 ml trockenem Xylol suspendiert und nach Zusatz von 2,5 g 1,1,1,3,3,3 Hexamethyldisilazan (HMDS) unter Rück- fluß 20 Stunden zum Sieden erhitzt. Nach Abfiltrieren und Waschen mit Methylenchlorid erfolgt die Trocknung bei 40°C im Vakuumtrockenschrank.

Genaue Daten des Materials:
Grundmaterial: Matrex Silica Si
Mittlerer Porendurchmesser: 25 nm
Partikelgröße: 0,005 mm
Spezifische Oberfläche: 292 m²/ g

Modifiziertes Kieselgel:
Spezifische Oberfläche: 215,4 m²/ g
Kohlenstoffgehalt: 4,77 % C

Polymer modifiziertes Kieselgel:
Spezifische Oberfläche: 151,4 m²/g
Kohlenstoffgehalt: 31,9 %

Füllen der Säule:
Die Füllung der Säule erfolgte nach der Slurry-Methode.
2,25 g polymer modifiziertes Kieselgel
45 ml Methanol/ Dioxan (2:1)
Laufmittel: Methanol/Dioxan (2:1)
Druck: 300 bar
Flow: ca. 4,5 ml / min
Dauer: 2,5 Stunden
Dimensionen der Säule: 250 x 4 mm

### Legenden zu den Abbildungen

Abb.1: Variation der Ankergruppenkonzentration Vergleich der Elutionsvolumina von chromatographischen Materialien zur GPC, die sich nur in der Konzentration der Ankergruppen (4-Vinyl-phenyl-siloxan) unterscheiden und dabei unterschiedliche Ausschlußgrenzen für Substanzen verschiedenen Molgewichts ergeben. Als Referenz ist nicht modifiziertes Kieselgel [pur] angegeben. Angegeben ist jeweils der Bruchteil der maximal möglichen Ankergruppenkonzentration (1/3; 1/11; 1/31; 1/100).
Abb. 2: Variation der Polymerisationszeit Entsprechend einem Kieselgel mit 1/11 der möglichen Ankergruppen wurden unter sonst gleichen Bedingungen die Polymerisationszeiten variiert und das GPC-Verhalten der resultierenden Materialien geprüft.
   pur = Referenzkieselgel unmodifiziert. Zeiten 1h; 2h; 4h.
Abb. 3: Variation des Inertlösungsmittels Unter sonst gleichen Bedingungen bei der Herstellung wurde das Monomer mit einem Inertlösungsmittel (Toluol) verdünnt und das GPC-Verhalten der resultierenden Materialien untersucht. 1/0 keine Verdünnung; in den übrigen Versuchen auf ein Volumenteil Monomer 1, 3, 7, 11 und 15 Volumenteile Inertlösungsmittel.
Abb. 4: Variation der AIBN-Konzentration Unter sonst gleichen Bedingungen wurde die Initiatorkonzentration (AIBN) variiert und anschließend das GPC-Verhalten der Materialien untersucht. 0.1, 1.0, 2.5 und 5.0 Gew.% AIBN auf Monomeranteil.
Abb. 5 a-f: Gelchromatographische Trennungen von Polystyrol 111 000 (PST-111000), Polystyrol 5000 (PST 5000), Tristearin, Triakontan (C 30), Eikosan (C 20), Tetradecan (C 14), Octan (C 8) und Benzol, bei verschiedenen Flußraten. Säule nach Beispiel 9.

## Patentansprüche

1. Säulenpackungsmaterial für die Gelpermeationschromatographie (GPC) bestehen aus Trägerpartikeln mit einem mittleren Partikeldurchmesser von 1 bis 50̸ µm, deren Matrix aus anorganischem oder organischem, polymeren und porösem Hartmaterial mit einem mittleren Porendurchmesser von 6 bis 50̸0̸ nm und einem Porenvolumen von 0̸,1 bis 3 ml/g gebildet wird, wobei die Poren der Matrix chemisch gebundene Polymerketten enthalten,
dadurch gekennzeichnet, daß die Poren der Matrix mit einem homogenen Polymergel völlig ausgefüllt sind, wobei die Polymerketten aus nicht vernetzten linearen Polymeren mit einer oberen Ausschlußgrenze zwischen 20̸0̸ und 20̸0̸.0̸0̸0̸ bestehen, wobei die Polymere für Lösungsmittel und Substanzen mit Molekulargewichten unterhalb der Ausschlußgrenzen permeabel sind.

2. Säulenpackungsmaterial nach Anspruch (1),
dadurch gekennzeichnet, daß die Trägerpartikeln einen mittleren Durchmesser von 10̸ bis 20̸0̸ nm, ein Porenvolumen von 0̸,3 bis 2 ml/g und eine mittlere Partikelgröße von 3 bis 20̸ µm aufweisen.

3. Säulenpackungsmaterial nach Anspruch (1),
dadurch gekennzeichnet, daß die Zahl der auf der Oberfläche der Trägerpartikeln gebundenen, polymerisationsfähigen Gruppen zwischen 0̸,1 und 10̸ µmol/m² beträgt.

4. Säulenpackungsmaterial nach Anspruch (1) und (3),
dadurch gekennzeichnet, daß die Zahl der auf der Oberfläche des Hartmaterials gebundenen, polymerisationsfähigen Gruppen zwischen 0̸,1 und 10̸ µmol/m² beträgt, wobei die so erhaltene Polymerstruktur die Permeation niedermolekularer Substanzen im Polymer stark beeinflußt.

5. Säulenpackungsmaterial nach Anspruch (1) und (3),
dadurch gekennzeichnet, daß die Zahl der auf der Oberfläche des Hartmaterials gebundenen, polymeristionsfähigen Gruppen zwischen 0̸,0̸1 und 0̸,3 µmol/m² beträgt.

6. Säulenpackungsmaterial nach Anspruch (1),
dadurch gekennzeichnet, daß in Trägerpartikeln aus Kieselgel mit einem Porenvolumen von 0̸,2 bis 2,5 ml/g Polymerketten in einer Menge von 10̸ bis 70̸ Gew.%, bevorzugt 20̸ bis 45 Gew.%, bezogen auf die Menge der eingesetzten Trägerpartikeln, enthalten sind.

7. Säulenpackungsmaterial nach Anspruch (1) oder (3),
dadurch gekennzeichnet, daß als Trägerpartikeln poröse Kieselgele, Aluminiumoxid, Glas, Zeolithe, Celite oder makroporöse Polymere auf der Basis von Vinyl oder Vinylidenverbindungen wie -halogeniden, -estern, aromatischen oder heteroaromatischen Derivaten; Methacrylaten, Acrylaten gegebenenfalls mit üblichen Vernetzern, wie Divenylbenzol, Glykoldimethacrylat, Methylenbisacrylamid und dergleichen verwendet werden, die inert und mechanisch stabil sind und mittlere Porendurchmesser von 6 bis 50̸0̸ nm, ein Porenvolumen von 0̸,1 bis 3 ml/g und eine mittlere Partikelgröße von 1 bis 50̸ µm aufweisen.

8. Säulenpackungsmaterial nach Anspruch (1),
dadurch gekennzeichnet, daß poröses Kieselgel als Trägerpartikeln verwendet wird.

9. Säulenpackungsmaterial nach Anspruch (1),
dadurch gekennzeichnet, daß als Ausgangsmaterial für die Polymerketten polymerisierbare Gruppierungen mit Doppelbindung, Carboxylgruppen, Aminogruppen, Hydroxylgruppen oder Gruppierungen zum Binden fertiger Polymere eingesetzt werden.

10. Säulenpackungsmaterial nach Anspruch (1) oder (9),
dadurch gekennzeichnet, daß als Ausgangsmaterial für die Polymerketten Monomere, wie Styrol oder Styrolderivate, Acrylderivate wie Acrylester, Acrylamide, beispielsweise Methylmethacrylat, Acrylamid, Hydroxyäthylenmethacrylat und dergleichen, nach Bedarf mit einem Initiator, wie Azobisisobutyronitril, Benzoylperoxid, eingesetzt werden.

11. Säulenpackungsmaterial nach Anspruch (1),
dadurch gekennzeichnet, daß die Polymerketten aus nicht vernetzten linearen permeablen Polymeren mit einer oberen Ausschlußgrenze zwischen 20̸0̸ und 20̸0̸.0̸0̸0̸ bestehen, wobei die Poren der Matrix durch die Polymerketten völlig ausgefüllt werden und durch die Dichte der Polymerkettenstruktur der Ausschlußgrenzbereich für die GPC zwischen 20̸0̸ und 20̸0̸.0̸0̸0̸ variiert werden kann.

12. Säulenpackungsmaterial nach den Ansprüchen (1) bis (11),
dadurch gekennzeichnet, daß sie in eine GPC-Säule eingefüllt sind.

13. Verfahren zur Herstellung der Säulenpackungsmaterialien nach den Ansprüchen (1) bis (12),
dadurch gekennzeichnet, daß die Poren der Trägerpartikeln durch an die Oberfläche der Poren chemisch gebundene Polymerketten ausgefüllt werden, wobei die Polymerketten für die Lösungsmittel und teilweise für die gelöste Substanzen permeabel sind.

14. Verfahren nach Anspruch (13),
dadurch gekennzeichnet, daß auf der Oberfläche der Trägerpartikeln zunächst polymerisierbare Ankergruppen kovalent gebunden werden und anschließend eine polymerisationsfähige Monomermischung und ein Polymerisationsinitator polymerisiert werden.

15. Verfahren nach Anspruch (13) oder (14),
dadurch gekennzeichnet, daß die Monomerischung mit einem hochsiedenden Inertlösungsmittel, wie Toluol, Xylol oder dergleichen, verdünnt wird.

16. Verfahren nach Anspruch (13) oder (14),
dadurch gekennzeichnet, daß die Monomermischung mit einem hochsiedenen Inertlösungsmittel, wie z.B. Toluol, Xylol oder dergleichen verdünnt wird, wodurch die Menge des gebildeten Polymers in den Poren variierbar ist, wodurch sich die scheinbare Porösität kontrollieren läßt.

17. Verfahren nach Anspruch (13),
wobei polymerisierbare Gruppierungen mit Doppelbindungen, Carboxylgruppen, Aminogruppen, Hydroxlgruppen oder Gruppierungen zum Binden fertiger Polymere in Form von Organosilanen über Siloxangruppierungen an die Oberfläche des Kieselgels gebunden werden, wobei die Konzentration dieser Gruppen zwischen 0̸,0̸1 und 6 µmol/m² eingestellt wird, nach Bedarf durch Mischen mit einem Überschuß an polymerisationsinaktivem Silan, wie Trimethylchlosilan oder Hexamethyldisilazan; oder durch starkes Verdünnen, wobei nach dem Binden der Organosilane die restlichen Silanolgruppen mit Trimethylchlorsilan oder Hexamethylendisilazan möglichst vollständig verkappt werden, und zwar durch Umsetzung in Tetrachlorkohlenstoff oder ähnlichen Lösungsmitteln bei Raumtemperatur oder bis 10̸0̸°C.

18. Verfahren nach Anspruch (13),
dadurch gekennzeichnet, daß als Ausgangsmaterial für die Herstellung der Polymerketten eine Mischung aus Monomer, Styrol, Methylmethacrylat, Acrylamid oder Hydroxyäthylenmethacylat und Initiatoren, wie Asobisisobutyronitril, Benzoylperoxid in einem leicht flüchtigen Lösungsmittel, wie Äthylenchlorid, Tetrahydrofuran oder Diethylether auf das mit Ankergruppen modifizierte poröse Kieselgel gebracht wird, das Lösungsmittel im Vakuum von 50̸ bis 0̸,1 mbar bei 0̸ bis 60̸°C entfernt wird, nach dem Sekurieren mit Stickstoff bei einer Temperatur von 30̸ bis 120̸°C über einen Zeitraum von 1 bis 10̸0̸ Stunden polymerisiert wird und der Überschuß an nicht kovalent an das Kieselgel gebundenem Polymer mit einem dieses Polymer lösende Lösungsmittel extrahiert wird.

19. Verfahren nach Anspruch (13),
dadurch gekennzeichnet, daß ein Überchuß an Monomervolumen im Verhältnis zum Porenvolumen der Partikeln in einer Menge von 10̸5 bis 40̸0̸% eingesetzt wird und daß der nicht kovalent gebundene Anteil an Polymer nach der Polymerisation mit einem geeigneten Lösungsmittel, wie Methylenchlorid, Toluol Essigester, Methanol oder Wasser herausgelöst wird.

20. Verwendung der Säulenpackungsmaterialien nach den Ansprüchen (1) bis (10̸) für die Gelpermeationschromatographie.

## Claims

1. A column packing material for gel chromatography (GPC) consisting of support particles with an average particle diameter of 1 to 50 µm, the matrix of which is formed from inorganic or organic, polymeric, porous hard material with an average pore diameter of 6 to 500 nm and a pore volume of 0.1 to 3 ml/g, wherein the pores of the matrix contain chemically bonded polymer chains, characterised in that the pores of the matrix are completely filled with a homogeneous polymer gel, wherein the polymer chains consist of uncrosslinked linear polymers with an upper exclusion limit between 200 and 200,000, wherein the polymers are permeable to solvents and substances with molecular weights less than the exclusion limits.

2. A column packing material according to claim 1, characterised in that the support particles have an average diameter of 10 to 200 nm, a pore volume of 0.3 to 2 ml/g and an average particle size of 3 to 20 µm.

3. A column packing material according to claim 1, characterised in that the number of groups capable of polymerisation bonded on the surface of the support particles is between 0.1 and 10 µmole/m².

4. A column packing material according to claim 1 and 3, characterised in that the number of groups capable of polymerisation bonded on the surface of the support particles is between 0.1 and 10 µmole/m², wherein the polymer structure thus obtained strongly affects the permeation of low molecular weight substances within the polymer.

5. A column packing material according to claim 1 and 3, characterised in that number of groups capable of polymerisation bonded on the surface of the support particles is between 0.01 and 0.3 µmole/m².

6. A column packing material according to claim 1, characterised in that polymer chains are contained, in an amount from 10 to 70 weight %, preferably 20 to 45 weight %, based on the amount of support particles used, in support particles of silica gel with a pore volume of 0.2 to 2.5 ml/g.

7. A column packing material according to claim 1 or 3, characterised in that porous silica gel, alumina, glass, zeolites, celite or macroporous polymers based on vinyl or vinylidene compounds such as halides, esters, aromatic or heteroaromatic derivatives; methacrylates, acrylates, optionally with the usual crosslinking agents such as divinylbenzene, glycol dimethacrylate, methylene bisacrylamide and the like are used as support particles which are inert and mechanically stable and which have an average pore diameter of 6 to 500 nm, a pore volume of 0.1 to 3 ml/g and an average particle size of 1 to 50 µm.

8. A column packing material according to claim 1, characterised in that porous silica gel is used as the support particles.

9. A column packing material according to claim 1, characterised in that polymerisable groupings with double bonds, carboxyl groups, amino groups, hydroxyl groups or groupings for bonding ready-made polymers are used as the starting material for the polymer chains.

10. A column packing material according to claim 1 or 9, characterised in that monomers such as styrene or styrene derivatives, or acrylic derivatives such as acrylic esters, acrylamides, for example methyl methacrylate, acrylamide, hydroxyethylene methacrylate and the like, are used as the starting material for the polymer chains, with an initiator such as azo-bis-isobutyronitrile or benzoyl peroxide if required.

11. A column packing material according to claim 1, characterised in that the polymer chains consist of uncrosslinked linear permeable polymers with an upper exclusion limit between 200 and 200,000, wherein the pores of the matrix are completely filled by the polymer chains and the exclusion limit range for GPC can be varied between 200 and 200,000 by means of the density of the polymer chain structure.

12. A column packing material according to claims 1 to 11, characterised in that it is packed in a GPC column.

13. A method of preparing the column packing materials according to claims 1 to 12, characterised in that the pores of the support particles are filled by polymer chains chemically bonded to the surface of the pores, wherein the polymer chains are permeable to the solvent and partially permeable to the dissolved substances.

14. A method according to claim 13, characterised in that polymerisable anchor groups are first covalently bonded to the surface of the support particles and a monomer mixture capable of polymerisation and a polymerisation initiator are subsequently polymerised.

15. A method according to claim 13 or 14, characterised in that the monomer mixture is diluted with a high boiling-point inert solvent such as toluene, xylene or the like.

16. A method according to claim 13 or 14, characterised in that the monomer mixture is diluted with a high boiling-point inert solvent such as toluene, xylene or the like, by means of which the amount of polymer formed in the pores can be varied, by means of which the apparent porosity can be controlled.

17. A method according to claim 13, wherein polymerisable groupings with double bonds, carboxyl groups, amino groups, hydroxyl groups or groupings for bonding ready-made polymers in the form of organosilanes are bonded to the surface of the silica gel via siloxane groupings, wherein the concentration of the latter groups is adjusted between 0.01 and 6 µ mole/m², if required by mixing with an excess of a silane which is inactive towards polymerisation, such as trimethyl chlorosilane or hexamethyl disilazane; or by strong dilution, wherein after the bonding of the organosilanes the residual silanol groups are blocked as completely as possible with trimethyl chlorosilane or hexamethyl disilazane by reaction in carbon tetrachloride or similar solvents at room temperature or up to 100°C.

18. A method according to claim 13, characterised in that a mixture of monomer, styrene, methyl methacrylate, acrylamide or hydroxyethylene methacrylate, and initiators such as azo-bis-isobutyronitrile or benzoyl peroxide, in a readily volatile solvent such as ethylene chloride, tetrahydrofurane or diethyl ether is applied as a starting material for the preparation of the polymer chains to the porous silica gel modified with anchor groups, the solvent is removed under a vacuum of 0.1 to 50 mbar at 0 to 60°C, polymerisation is effected at a temperature of 30 to 120°C over a period of 1 to 100 hours after protecting with nitrogen, and the excess of polymer which is not covalently bonded to the silica gel is extracted with a solvent which dissolves this polymer.

19. A method according to claim 13, characterised in that the volume of monomer is adjusted to be in excess by an amount of 105 to 400 % in relation to the pore volume of the particles and that the fraction of polymer which is not covalently bonded is dissolved away after the polymerisation in a suitable solvent such as methylene chloride, toluene acetic ester, methanol or water.

20. The use of the column packing materials according to claims 1 to 10 for gel permeation chromatography.

## Revendications

1. Un matériau de garniture pour colonne de chromatographie par perméation de gel (C.P.G.) constitué par un substrat de particules ayant un diamètre moyen compris dans un intervalle allant de 1 à 50 µm dont la matrice est constituée par un matériau dur et poreux, inorganique ou organique dont le diamètre moyen des pores est compris dans un intervalle allant de 6 à 500 nm et dont le volume poreux est compris dans un intervalle allant de 0,1 à 3 ml/g, matériau dont les pores de la matrice renferment des chaînes de polymères liées chimiquement,
caractérisé en ce que les pores de la matrice sont entièrement remplis par un gel homogène de polymère dans lequel les chaînes de polymères sont composées par des polymères linéaires non réticulées dont la limite supérieure d'exclusion est comprise dans un intervalle allant de 200 à 200.000, ce qui fait que ces polymères sont perméables aux solvants et aux substances ayant un poids moléculaire inférieur à la limite d'exclusion.

2. Un matériau de garniture de colonne selon la revendication 1, caractérisé en ce que les particules du substrat ont un diamètre moyen compris dans un intervalle allant de 10 à 200 nm, un volume poreux compris dans un intervalle allant de 0,3 à 2 ml/g et une taille moyenne de particules comprise dans un intervalle allant de 3 à 20 µm.

3. Un matériau de garniture de colonne selon la revendication 1, caractérisé en ce que le nombre de groupes polymérisables qui se trouvent liés à la surface des particules du substrat est compris dans un intervalle allant de 0,1 à 10 µmol/m².

4. Un matériau de garniture de colonne selon la revendication 1 et 3, caractérisé en ce que le nombre de groupes polymérisables qui se trouvent liés à la surface du matériau dur constituant les particules du substrat est compris dans un intervalle allant de 0,1 à 10 µmol/m², dans lequel la structure du polymère ainsi obtenue influence fortement la perméation des substances de faible poids moléculaire au sein du polymère.

5. Un matériau de garniture de colonne selon la revendication 1 et 3, caractérisé en ce que le nombre de groupes polymérisables qui se trouvent liés à la surface du matériau dur constituant les particules du substrat est compris dans un intervalle allant de 0,01 à 0,3 µmol/m².

6. Un matériau de garniture de colonne selon la revendication 1, caractérisé en ce que des chaînes de polyméres sont contenues dans les particules du substrat constituées de gel de silice dont le volume poreux est compris dans un intervalle allant de 0,2 à 2,5 ml/g,et sontprésentes en quantité allant de 10 à 70% en poids, de préférence 20 à 45% en poids, par rapport à la quantité de particules de substrat présentes.

7. Un matériau de garniture de colonne selon la revendication 1 ou 3, caractérisé en ce que l'on emploie, comme particules de substrat, des gels de silice poreux, de l'alumine, du verre, de la zéolithe, de la célite ou des polymères macroporeux à base de composés de vinyle ou de vinylidène tels que les halogénures, les esters, les dérivés aromatiques ou hétéro-aromatiques; des méthacrylates, des acrylates, le cas échéant accompagnés d'agents de réticulation classiques tels que le divinyl-benzène, le diméthacrylate de glycol, le méthyl-bis-acrylamide et autres composés du même type, qui sont inertes et mécaniquement stables et qui présentent un diamétre de pore moyen compris dans un intervalle allant de 6 à 500 nm, un volume poreux compris dans un intervalle allant de 0,1 à 3 ml/g et une taille moyenne de particule comprise dans un intervalle allant de 1 à 50 µm.

8. Un matériau de garniture de colonne selon la revendication 1, caractérisé en ce que l'on emploie comme particule de substrat du gel de silice poreux.

9. Un matériau de garniture de colonne selon la revendication 1, caractérisé en ce que l'on emploie comme produit de départ pour les chaînes de polymères, des groupes polymérisables à doubles liaisons, des groupes carboxyles, des groupes amino, de groupes hydroxyles ou des groupes permettant la liaison de polymères déjà existants.

10. Un matériau de garniture de colonne selon la revendication 1 ou 9 caractérisé en ce que l'on emploie comme produit de départ pour les chaînes de polymères, des monomères comme le styrène ou les dérivés du styrène, les dérivés acryliques tels que les esters d'acryle, les amides d'acryle, par exemple le méthacrylate de méthyle, l'acrylamide, le méthacrylate d'hydroxy-éthylène et autres composés du même type, au besoin en utilisant un initiateur tel que l'azobis-isobutyro-nitrile ou le peroxyde de benzoyle.

11. Un matériau de garniture de colonne selon la revendication 1, caractérisé en ce que les chaînes de polymères sont composées par des polymères perméables, linéaires et non réticulées dont la limite supérieure d'exclusion est comprise dans un intervalle allant de 200 à 200.000, dans lequel les pores de la matrice sont entièrement remplis par les chaînes de polymères et pour lequel on peut, suivant la densité de la structure des chaînes de polymères, faire varier de 200 à 200.000 le domaine dans lequel se trouve la limite d'exclusion pour la C.P.G..

12. Un matériau de garniture de colonne selon les revendications 1 à 11, caractérisé en ce qu'on en remplit une colonne de C.P.G..

13. Procédé pour la fabrication de matériaux de garniture de colonne d'après les revendications 1 à 12, caractérisé en ce que les pores des particules du substrat sont remplis par des chaînes de polymères liées chimiquement à la surface des pores, dans lequel les chaînes de polymères sont perméables pour le solvant et le sont partiellement pour les substances dissoutes.

14. Procédé d'après la revendication 13, caractérisé en ce qu'on lie tout d'abord par covalence des radicaux actifs polymérisables à la surface des particules du substrat pour ensuite polymériser un mélange de monomères susceptibles de polymériser quand on emploie un initiateur de polymérisation.

15. Procédé d'après la revendication 13 ou 14, caractérisé en ce qu'on dilue le mélange de monomères à l'aide d'un solvant inerte à point d'ébullition élevé, tel que par exemple le toluène, le xylène ou autres solvants du même type.

16. Procédé d'après la revendication 13 ou 14, caractérisé en ce qu'on dilue le mélange de monomères à l'aide d'un solvant inerte à point d'ébullition élevé, tel que par exemple le toluène, le xylène ou autres solvants du même type, ce qui permet de faire varier la quantité de polymères produite au sein des pores et de contrôler la porosité apparente.

17. Procédé d'après la revendication 13, dans lequel on lie à la surface du gel de silice des groupes polymérisables à doubles liaisons, des groupes carboxyles, des groupes amino, des groupes hydroxyles ou des groupes permettant la liaison par des groupes siloxanes de polymères déjà existants ayant la forme d'organosilanes, dans lequel la concentration de ces groupes est comprise dans un intervalle allant de 0,01 à 6 µmol/m², en mélangeant au besoin à un excès de silane inactivé (pour ce qui concerne la polymérisation), tel que le triméthyl-chlorosilane ou l'hexa-méthyl-disilazane; ou par une forte dilution permettant de masquer si possible entièrement les groupes silanols restants par le triméthyl-chlorosilane ou par l'hexa-méthyléne-disilazane, après que la liaison des organosilanes ait été réalisée, et cela grâce à la décomposition à température ambiante ou à une température pouvant aller jusqu'à 100°C, dans le tétrachlorure de carbone ou autre solvant du même type.

18. Procédé d'après la revendication 13, caractérisé en ce que l'on ajoute un mélange de monomères tels que le styrène, le méthacrylate de méthyle, l'acrylamide ou le méthacrylate d'hydroxy-éthylène accompagnés de leurs initiateurs tels que l'azobis-iso-butyronitrile, le peroxyde de benzoyle dans un solvant très volatile comme le chlorure d'éthylène, le tétra-hydro-furane ou l'éther diéthylique, sur le gel de silice poreux modifié par des radicaux actifs, en tant que matériau de départ pour la fabrication des chaînes de polymères, le solvant étant éliminé sous vide sous une pression comprise dans un intervalle allant de 50 à 0,1 mbar et à une température comprise dans un intervalle allant de 0 à 60°C, en ce que, après avoir purgé à l'azote le réacteur, l'on fait polymériser le mélange de monomères à une température comprise dans un intervalle allant de 30 à 120°C pour une durée de réaction allant de 1 à 100 heures et en ce que l'on extrait l'excès des polymères qui ne sont pas liés par liaison covalente au gel de silice, en utilisant un solvant ayant la capacité de dissoudre ce polymère.

19. Procédé d'après la revendication 13, caractérisé en ce que l'on introduit un excès en volume de monomères par rapport au volume des pores des particules, suivant une quantité allant de 105 à 400% et en ce qu'on élimine par dissolution la partie des polymères qui n'a pas été liée par liaison covalente après la réaction de polymérisation, en employant un solvant approprié tel que le chlorure de méthylène, le toluène, l'éther acétique, le méthanol ou l'eau.

20. Emploi des matériaux pour garniture de colonne selon les revendications 1 à 10 dans la chromatographie par perméation de gel.
